# EUROPEAN PATENT SPECIFICATION

(11) **EP 4 271 590 B1**
(45) Date of publication and mention of the grant of the patent: **11.12.2024**
(21) Application number: 21810892.6
(22) Date of filing: 08.04.2021
(51) Int. Cl.: B60P 7/06, B60P 3/00, B60P 7/10, B60P 7/16, B60P 7/15

(54) **SENSITIVE LOAD SAFETY SYSTEM**
EMPFINDLICHES LADESICHERHEITSSYSTEM
SYSTÈME DE SÉCURITÉ DE CHARGE SENSIBLE

(30) Priority: 31.12.2020 TR 202022785
(43) Date of publication of application: 08.11.2023
(73) Proprietor: Tirsan Treyler Sanayi Ve Ticaret Anonim Sirketi, 54010 Arifiye/Sakarya (TR)
(72) Inventor: KESKIN, Mustafa Ismail, Arifiye/Sakarya (TR)
(74) Representative: Yamankaradeniz, Kemal
(86) International application number: PCT/TR2021/050333
(87) International publication number: WO 2022/146278

(56) References cited:
- CN-A- 104 553 951
- DE-A1- 4 211 936
- DE-U1- 202008 012 470
- DE-U1- 202018 103 212
- JP-A- 2005 306 186
- US-B1- 6 457 921

## Description

### Technical Field

The invention relates to a load safety system which has been developed for panel type load carrying vehicles which are referred to as inloaders.

The invention relates in particular to a sensitive load safety system which enables achieving loading operation to be carried out in a controlled manner that minimizes operator errors in inloader vehicles carrying loads sensitive to breaking, getting damaged in glass carriers, concrete block carriers and panel carriers etc.

### Prior Art

Various types of securing system and members are included in panel type load carrying vehicles (inloader vehicles) that are used in the transportation of sensitive loads in which problems of breakage, scratching, cracking, etc. are likely to be experienced. Hydraulic securing systems are the configurations which are commonly used in recent years. Hydraulic securing systems consist of holding mechanisms which support the load from its both sides following loading of sensitive loads on the vehicle, and hydraulic cylinders which push these holding mechanisms toward the load in the stationary position.

Although hydraulic securing systems operate trouble-free and are quite effective in the undamaged transportation of the load, occasionally operator oriented problems can be experienced since the control of the system is being achieved by the operator. Activation of the system so as to hold the load securely is being achieved by the operator following completion of loading operation. Breakages occur and significant material damage forms as a result of lateral forces which exert on the load in the process of transportation in the event when the operator forgets to activate the system.

Application number DE4211936 (A1) has been encountered in the literature survey related to safety system. Said application relates to a safety system which indicates that the load has been secured and that the vehicle can proceed in order to prevent accidents and formation of damages in the transportation of loads such as glass sheets. The safety system basically possesses locking circuits for load safety and chassis locking, and pressure sensors which detect the weight of the load. A sensor is included in the control circuit of the system which reacts to loading of the vehicle and transmits signal to unlock the chassis lock only when the load has been secured. The control circuit is fully automatic and operates independently from the operator. The sensor employed in the system is a pressure sensor and the sensor signal is being fed to a converter which produces an audible or visual warning concerning that the load has been secured.

Consequently, the existence of the above problems and insufficiency of existing solutions on the subject have made it compulsory to perform a development in the respective technical field.

### Brief Description of the invention

The present invention relates to a load safety system aimed at to be used in inloader vehicles which eliminates the above mentioned disadvantages and which provides new advantages to the respective technical field.

The prioritized object of the invention is to set forth a sensitive load safety system which hinders damage and material losses by preventing load securing errors caused by the operator in inloader type vehicles.

An object of the invention is to set forth a sensitive load safety system in which loading operation can be controlled.

In order for fulfilling the objects discussed above, the invention relates to hydraulic cylinders activated via a hydraulic valve block in order to enable securing of sensitive loads that are to be loaded onto an inloader vehicle, and load holding mechanisms driven by said hydraulic cylinders, suspension air bags which are in communication with the wheels of the inloader vehicle, and a load safety system in which an EBS modulator is included. Accordingly, said load safety system contains an electronic control unit which activates said load safety system by receiving "the vehicle has been loaded signal" produced by said EBS modulator in line with the "suspension pressure" that has been formed by the total load of the vehicle; which receives a "hydraulic pressure" information from said hydraulic valve block upon activation of said load holding mechanism by the operator; and which generates "brake activation signal" which enables the EBS modulator to shift the brake to active or passive state by comparing with the ideal pressure value.

In order to fulfill the objects of the invention, said load safety system contains a pressure sensor which has been provided in said hydraulic valve block which transmits "hydraulic pressure" data of the hydraulic cylinders to said electronic control unit.

In order to fulfill the objects of the invention, total load of said vehicle is a reference value determined by the sum of the weight of the vehicle and the weight of the load to be transported.

In order to fulfill the objects of the invention, said "suspension pressure" data is being provided via suspension air bags.

In order to fulfill the objects of the invention, said "the vehicle has been loaded signal" is being generated in the event when the total load of the vehicle is above or equal to the reference value.

In order to fulfill the objects of the invention, in the event when said "hydraulic pressure" information reaches to ideal pressure value, a "hydraulic control signal" is transmitted from said electronic control unit to the hydraulic valve block to enable stopping the pump and valves.

The invention relates to also hydraulic cylinders activated via a hydraulic valve block in order to enable securing the sensitive loads that are to be loaded onto an inloader vehicle, and load holding mechanisms driven by said hydraulic cylinders, suspension air bags in communication with the wheels of the inloader vehicle, and the method of operation of a load safety system in which an EBS modulator is included. Accordingly, said method of operation contains the following operation steps:
a) measurement of total load of the vehicle by said EBS modulator via "suspension pressure" value determined by the suspension air bags,
b) transmittal of "the vehicle has been loaded signal" by the EBS modulator to the electronic control unit in the event when the total load of the vehicle is greater than or equal to the reference load value, and beginning of the load safety system to operate in the automatic mode,
c) beginning of reference starting period defined in the electronic control unit upon beginning of load safety system to operate,
d) securing of sensitive load with the load holding mechanisms upon activation of hydraulic cylinders on the hydraulic valve block by the operator via control panel by the electronic control unit before the expiry of the reference starting period,
e) transmitting "hydraulic pressure" data formed in the direction of compression by a pressure sensor over the hydraulic valve block to the electronic control unit, and controlling the incoming "hydraulic pressure" data by the electronic control unit for reaching the ideal pressure value,
f) stopping the pump and the valves connected to the hydraulic valve block by the electronic control unit with a "hydraulic control signal" when the hydraulic cylinders reach ideal compression pressure.

In order to fulfill the objects of the invention, in said method of operation, in the event when the reference starting period has been exceeded, in order to enable the operator to notice that sensitive load has not been secured, "brake activation signal" is being transmitted to the EBS modulator from the electronic control unit in order for the activation of brakes of the vehicle, and the movement of the inloader vehicle is being limited.

In order to fulfill the objects of the invention, in said method of operation in the event when the total load of the vehicle is smaller than the reference load value, "the vehicle has been loaded signal" is not being transmitted from the EBS modulator to the electronic control unit, and the load safety system is being operated in the manual mode upon discretion of the operator.

Structural and characteristic features all advantages of the invention will be understood more clearly by means of the drawings and the detailed description written by referring to those drawings given below, and hence it should be appreciated by considering these drawings and the detailed description.

### Drawings which will aid in understanding of the invention

**Figure 1** is the rear view of the inloader vehicle in which load safety system of the invention is included.
**Figure 2** is a schematic view of the inloader in which vehicle load safety system of the invention functions.

The drawings do not necessarily be in scale and details which are not required to understand the present invention could have been omitted. Furthermore, members which are at least substantially identical or having at least substantially identical functions have been indicated with the same number.

### Description of Parts References

10 Inloader Vehicle
11 Load Holding Mechanism
12 Hydraulic Cylinder
13 Hydraulic Valve Block
   131 Pressure Sensor
14 EBS Modulator
15 Suspension Air Bags
16 Control Panel
20 Electronic Control Unit (ECU)

### Detailed Description of the Invention

In this detailed description load safety system of the invention is described aimed at only better understanding of the subject and without forming any limiting effect.

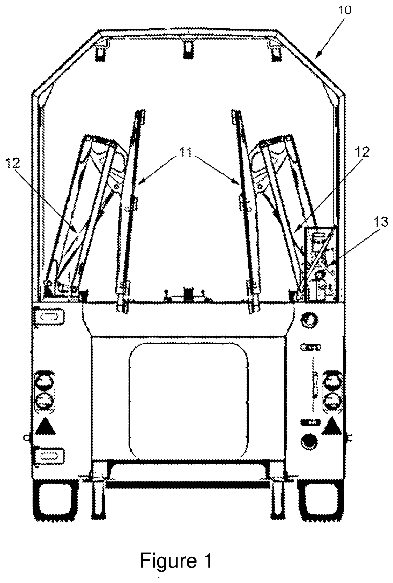

The load safety system of the invention is being associated with an inloader vehicle (10) the rear view of which has been given in Figure 1, and is being used to hinder glass carrier, prefabricated panel and similar sensitive loads getting damaged once they are loaded on the inloader vehicle (10) because of problems caused by operator errors. The operation of the load safety system begins at the moment when the load to be transported is loaded on the vehicle, continues during the cruise and ends when the last load unit is unloaded.

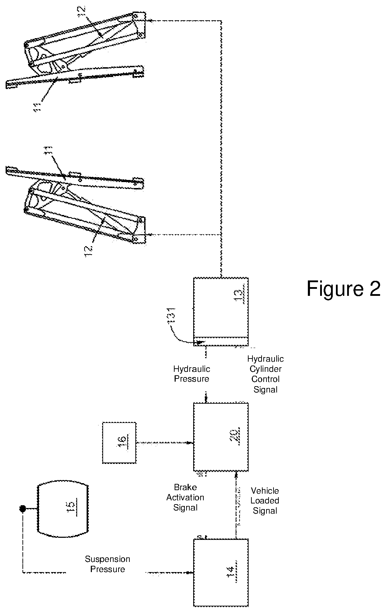

The load safety system the schematic view of which has been given in Figure 2 consists of a load holding mechanism (11) to enable the load placed on the inloader vehicle (10) in stationary position, hydraulic cylinders (12) which provide drive to said load holding mechanism (11) in order to form holding force, and a hydraulic valve block (13) connected to said hydraulic cylinders (12). Pressure to the hydraulic cylinders (12) is being provided by the hydraulic pump. Compression/decompression valves and a pressure sensor (131) are included in said hydraulic valve block (13) which enables hydraulic pressure to be measured.

An EBS modulator (14) is included in the load safety system. Said EBS modulator (14) houses and controls all brake and suspension functions of the inloader vehicle (10). Suspension air bags (15) are included in the wheels of the inloader vehicle (10). Determination of the pressure formed by the load of the vehicle is being provided by said suspension air bags (15). The load safety system also comprises an electronic control unit (ECU) (20) provided between the EBS modulator (14) and the hydraulic valve block (13). The load safety system is being controlled through a control panel (16).

In the loading of the inloader vehicle (10) possessing load safety system 2 reference values are required to be determined. These reference values are that which the inloader vehicle (10) will be considered as being loaded after what weight and how many seconds later the load safety system will activate the brakes once the load has been detected. In standard applications, brakes become activated 60 seconds after the load has been detected in the event when the vehicle total load consisting of the sum of the weight of the vehicle and the weight of the load to be transported is above 20 tons. In the alternative configurations of the invention, it is possible to use different reference values for vehicle total load and brake activation period.

"Suspension pressure" value formed by the total load of the vehicle over the suspension air bags (15) is being transferred to the EBS modulator (14). EBS modulator (14) transmits "the vehicle has been loaded signal" to the electronic control unit (20) and receives the "brake activation signal". Electronic control unit (20) receives "hydraulic pressure" data from the hydraulic valve block (13), and transmits "hydraulic cylinder control signal". Load safety system has two modes of operation one of which is the automatic mode which becomes activated when the EBS modulator (14) detects the inloader vehicle (10) as being loaded and the other one which is the manual mode when it is activated by the operator.

### Automatic Mode:

When the sensitive load has been loaded on the inloader vehicle (10), the EBS modulator (14) measures the total load of the vehicle via "suspension pressure" value determined with the suspension air bags (15), and determines whether or not it is greater than or equal to 20 tons (reference value). In the event when the vehicle total load is greater than or equal to 20 tons, the EBS Modulator (14) sends "the vehicle has been loaded signal" to the electronic control unit (20) and the load safety system starts operating automatically. Upon starting operation of the load safety system, the defined 60-second reference starting period defined in the electronic control unit (20) begins. Within this period of time, the operator must secure the sensitive load by operating the load holding mechanism (11) via control panel (16). In the event when the period is exceeded, the electronic control unit (20) send the "brake activation signal" to the EBS modulator (14) in order to activate the brakes of the vehicle. The brakes of the inloader vehicle (10) become activated with the "brake activation signal" and movement of the inloader vehicle (10) is being limited. Upon limiting the movement of the inloader vehicle (10), the operator activates the hydraulic cylinders (12) by operating the pump and valves which are connected to the hydraulic valve block (13) by the electronic control unit (20) via control panel (16) by noticing that the sensitive load has not been secured. And the hydraulic cylinders (12) enable holding the sensitive load securely by directing the load holding mechanisms (11). At this stage, "hydraulic pressure" data in the direction of compression is being transmitted to the electronic control unit (20) by the pressure sensor over the (131) hydraulic valve block (13), and the electronic control unit (20) controls the incoming "hydraulic pressure" data for reaching the ideal pressure value. When the hydraulic cylinders (12) reach the ideal compression pressure, the electronic control unit (20) stops the pump and valves connected to the hydraulic valve block (13) with a "hydraulic control signal", and cuts off the "brake activation signal" which it has sent to the EBS modulator (14). In this way, the EBS modulator (14) fades the brakes and the operator is able to move the inloader vehicle (10) safely.

### Manual Mode:

When sensitive load is loaded on the inloader vehicle (10), the EBS modulator (14) measures the total load of the vehicle determined by the suspension air bags (15) via "suspension pressure" value, and determines whether it is greater than or equal to 20 tons (reference value). In the event when the vehicle total load is less than 20 tons, the EBS Modulator (14) does not send "the vehicle has been loaded signal" to the electronic control unit (20). Despite this, the operator may wish to activate the load safety system. In this case, the operator activates the hydraulic cylinders (12) by operating the pump and valves connected to the hydraulic valve block (13) by the electronic control unit (20) via control panel (16). And hydraulic cylinders (12) enable securely holding the sensitive load by directing load holding mechanisms (11). At this stage, "hydraulic pressure" data in the direction of compression is being transmitted to the electronic control unit (20) by the pressure sensor (131) over the hydraulic valve block (13), and the electronic control unit (20) controls the incoming "hydraulic pressure" data for reaching the ideal pressure value. When the hydraulic cylinders (12) reach the ideal compression pressure, the electronic control unit (20) activates the load safety system by stopping the pump and valves connected to the hydraulic valve block (13). In this way, in the event when the total load of the vehicle is smaller than 20 tons too, it can safely move the inloader vehicle (10).

In cases when the inloader vehicle (10) is cruising, when the load safety system is active, the electronic control unit (20) continuously controls the pressure of the hydraulic cylinders (12) by the pressure sensor (131) over the hydraulic valve block (13). In the event when decrease in the "hydraulic pressure" value has been determined, the reduced pressure is enabled to be made up automatically by the load safety system by operating the pump and valves connected to the hydraulic valve block (13).

During the transportation of sensitive loads with the load safety system of the invention, operator errors and material damages related to hydraulic pressure losses in cruising state can be prevented. The operator cannot move the inloader vehicle (10) without securing the sensitive load and in this way he minimizes the probability of error by controlling whether the loading job has been safely achieved or not. The loading operation is achieved in a certain period of time with controllable parameters by the load safety system.

## Claims

1. A load safety system in which hydraulic cylinders (12) which are being activated via a hydraulic valve block (13) in order to enable securing of sensitive loads to be loaded on an inloader vehicle (10), and load holding mechanisms (11) which are driven by said hydraulic cylinders (12), suspension air bags (15) in communication with the wheels of the inloader vehicle (10) and an EBS modulator (14) are included, **wherein** it comprises an electronic control unit (20) which;
- activates said load safety system by receiving "the vehicle has been loaded signal" generated by said EBS modulator (14) in line with the "suspension pressure" formed by the total load of the vehicle,
- receives a "hydraulic pressure" information from said hydraulic valve block (13) upon activation of said load holding mechanisms (11) by the operator, and
- generates a "brake activation signal" which enables the EBS modulator (14) to shift the brakes to active or passive state by comparing with the ideal pressure value.

2. A load safety system according to Claim 1, **wherein** it comprises a pressure sensor (131) provided in said hydraulic valve block (13) which transmits to said electronic control unit (20) the "hydraulic pressure" data of the hydraulic cylinders (12) which provide pushing force to said load holding mechanisms (11).

3. A load safety system according to Claim 1, **wherein** the total load of said vehicle is a reference value determined by the sum of the weight of the vehicle and the weight of the load to be transported.

4. A load safety system according to Claim 1, **wherein** said "suspension pressure" data are being supplied via suspension air bags (15).

5. A load safety system according to Claim 1 or 3, **wherein** said "the vehicle has been loaded signal" is being generated in the event when the total load of the vehicle is above the reference value or equal to the reference value.

6. A load safety system according to Claim 1, **wherein** in the event when said "hydraulic pressure" information reaches the ideal pressure value, a "hydraulic control signal" is being transmitted from said electronic control unit (20) to the hydraulic valve block (13) to enable stopping the pump and valves.

7. The method of operation of a load safety system including hydraulic cylinders (12) activated via a hydraulic valve block (13) in order to enable securing the sensitive loads to be loaded on an inloader vehicle (10) and load holding mechanisms (11) which are driven by said hydraulic cylinders (12), suspension air bags (15) in communication with the wheels of the inloader vehicle (10) and an EBS modulator (14) **wherein** it comprises the operation steps of:
a) measurement of total load of the vehicle by said EBS modulator (14) via "suspension pressure" value determined by the suspension air bags (15),
b) transmittal of "the vehicle has been loaded signal" by the EBS modulator (14) to the electronic control unit (20) in the event when the total load of the vehicle is greater than or equal to the reference load value, and beginning of the load safety system to operate in the automatic mode,
c) beginning of reference starting period defined in the electronic control unit (20) upon beginning of load safety system to operate,
d) securing of sensitive load with the load holding mechanisms (11) upon activation of hydraulic cylinders (12) on the hydraulic valve block (13) by the operator via control panel (16) by the electronic control unit (20) before the expiry of the reference starting period,
e) transmitting "hydraulic pressure" data formed in the direction of compression by a pressure sensor (131) over the hydraulic valve block (13) to the electronic control unit (20), and controlling the incoming "hydraulic pressure" data by the electronic control unit (20) for reaching the ideal pressure value,
f) stopping the pump and the valves connected to the hydraulic valve block (13) by the electronic control unit (20) with a "hydraulic control signal" when the hydraulic cylinders (12) reach ideal compression pressure.

8. The method of operation of a load safety system according to Claim 7, **wherein** in the event when the reference starting period in said step (c) has been exceeded, in order to enable the operator to notice that sensitive load has not been secured, "brake activation signal" is being transmitted to the EBS modulator (14) from the electronic control unit (20) in order for the activation of brakes of the vehicle, and the movement of the inloader vehicle (10) is being limited.

9. The method of operation of a load safety system according to Claim 7, **wherein** in said step (a) in the event when the total load of the vehicle is smaller than the reference load value, "the vehicle has been loaded signal" is not being transmitted from the EBS modulator (14) to the electronic control unit (20), and the load safety system is being operated in the manual mode upon discretion of the operator.

## Patentansprüche

1. Ladesicherheitssystem, in dem Hydraulikzylinder (12), die über einen Hydraulikventilblock (13) aktiviert werden, um das Sichern empfindlicher Ladungen zu ermöglichen, die auf ein Innenladerfahrzeug (10) zu laden sind, und Ladungshaltemechanismen (11), die von den Hydraulikzylindern (12) angetrieben werden, Aufhängungsairbags (15) in Kommunikation mit den Rädern des Innenladerfahrzeugs (10) und ein EBS-Modulator (14) beinhaltet sind, **wobei** es eine elektronische Steuereinheit (20) umfasst, die;
- das Ladesicherheitssystem durch Empfangen eines "das Fahrzeug wurde beladen-Signals" aktiviert, das von dem EBS-Modulator (14) entsprechend dem von der Gesamtladung des Fahrzeugs produzierten "Aufhängungsdruck" erzeugt wird,
- eine "Hydraulikdruck"-Information von dem Hydraulikventilblock (13) bei Aktivierung der Ladungshaltemechanismen (11) durch den Bediener empfängt und
- ein "Bremsenaktivierungssignal" erzeugt, das es dem EBS-Modulator (14) ermöglicht, die Bremsen durch Vergleich mit dem idealen Druckwert in einen aktiven oder passiven Zustand zu versetzen.

2. Ladesicherheitssystem nach Anspruch 1, **wobei** es einen Drucksensor (131) umfasst, der in dem Hydraulikventilblock (13) bereitgestellt ist, der die "Hydraulikdruck"-Daten der Hydraulikzylinder (12), die Schubkraft für die Ladungshaltemechanismen (11) bereitstellen, an die elektronische Steuereinheit (20) überträgt.

3. Ladesicherheitssystem nach Anspruch 1, **wobei** die Gesamtladung des Fahrzeugs ein Referenzwert ist, der von der Summe des Gewichts des Fahrzeugs und des Gewichts der zu transportierenden Ladung bestimmt wird.

4. Ladesicherheitssystem nach Anspruch 1, **wobei** die "Aufhängungsdruck"-Daten mittels Aufhängungsairbags (15) geliefert werden.

5. Ladesicherheitssystem nach Anspruch 1 oder 3, **wobei** das "das Fahrzeug wurde beladen-Signal" erzeugt wird, falls die Gesamtladung des Fahrzeugs oberhalb des Referenzwerts oder gleich dem Referenzwert ist.

6. Ladesicherheitssystem nach Anspruch 1, **wobei,** falls die "Hydraulikdruck"-Information den idealen Druckwert erreicht, ein "Hydrauliksteuersignal" von der elektronischen Steuereinheit (20) an den Hydraulikventilblock (13) übertragen wird, um das Anhalten der Pumpe und der Ventile zu ermöglichen.

7. Betriebsverfahren eines Ladesicherheitssystems, das Hydraulikzylinder (12), die über einen Hydraulikventilblock (13) aktiviert werden, um das Sichern der empfindlichen Lasten zu ermöglichen, die auf ein Innenladerfahrzeug (10) zu laden sind, und Ladungshaltemechanismen (11), die von den Hydraulikzylindern (12) angetrieben werden, Aufhängungsairbags (15) in Kommunikation mit den Rädern des Innenladerfahrzeugs (10) und einen EBS-Modulator (14) beinhaltet, **wobei** es die folgenden Betriebsschritte umfasst:
a) Messung der Gesamtladung des Fahrzeugs durch den EBS-Modulator (14) mittels eines "Aufhängungsdruck"-Werts, der von den Aufhängungsairbags (15) bestimmt wird,
b) Übertragung des "das Fahrzeug wurde beladen-Signals" durch den EBS-Modulator (14) an die elektronische Steuereinheit (20), falls die Gesamtladung des Fahrzeugs größer als der oder gleich dem Referenzladungswert ist, und Beginn des Betriebs des Ladesicherheitssystems im automatischen Modus,
c) Beginn des Referenzstartzeitraums, der in der elektronischen Steuereinheit (20) bei Beginn des Betriebs des Ladesicherheitssystems definiert ist,
d) Sichern der empfindlichen Ladung mit den Ladungshaltemechanismen (11) bei Aktivierung der Hydraulikzylinder (12) an dem Hydraulikventilblock (13) durch den Bediener über ein Bedienfeld (16) durch die elektronische Steuereinheit (20) vor dem Ablauf des Referenzstartzeitraums,
e) Übertragen von in der Kompressionsrichtung produzierten "Hydraulikdruck"-Daten durch einen Drucksensor (131) über dem Hydraulikventilblock (13) an die elektronische Steuereinheit (20) und Steuern der eingehenden "Hydraulikdruck"-Daten durch die elektronische Steuereinheit (20) zum Erreichen des idealen Druckwerts,
f) Anhalten der Pumpe und der mit dem Hydraulikventilblock (13) verbundenen Ventile durch die elektronische Steuereinheit (20) mit einem "Hydrauliksteuersignal", wenn die Hydraulikzylinder (12) einen idealen Kompressionsdruck erreichen.

8. Verfahren zum Betrieb eines Ladesicherheitssystems nach Anspruch 7, **wobei,** falls der Referenzstartzeitraum in dem Schritt (c) überschritten wurde, damit der Bediener bemerken kann, dass die empfindliche Ladung nicht gesichert wurde, ein "Bremsenaktivierungssignal" von der elektronischen Steuereinheit (20) an den EBS-Modulator (14) zur Aktivierung der Bremsen des Fahrzeugs übertragen wird, und die Bewegung des Innenladerfahrzeugs (10) eingeschränkt ist.

9. Verfahren zum Betrieb eines Ladesicherheitssystems nach Anspruch 7, **wobei** in dem Schritt (a), falls die Gesamtladung des Fahrzeugs kleiner als der Referenzladungswert ist, ein "das Fahrzeug wurde beladen-Signal" nicht von dem EBS-Modulator (14) an die elektronische Steuereinheit (20) übertragen wird und das Ladesicherheitssystem nach Ermessen des Bedieners im manuellen Modus betrieben wird.

## Revendications

1. Système de sécurité de charge dans lequel sont compris des vérins hydrauliques (12) qui sont activés par l'intermédiaire d'un bloc de vanne hydraulique (13) afin de permettre la fixation de charges sensibles devant être chargées sur un véhicule à chargement interne (10), et des mécanismes de maintien de charge (11) qui sont entraînés par lesdits vérins hydrauliques (12), des coussins d'air de suspension (15) en communication avec les roues du véhicule à chargement interne (10) et un modulateur EBS (14), **dans lequel** est comprise une unité de commande électronique (20) qui ;
- active ledit système de sécurité de charge en recevant « le signal indiquant que le véhicule a été chargé » généré par ledit modulateur EBS (14) en fonction de la « pression de suspension » formée par la charge totale du véhicule,
- reçoit une information de « pression hydraulique » dudit bloc de vanne hydraulique (13) lors de l'activation desdits mécanismes de maintien de charge (11) par l'opérateur, et
- génère un « signal d'activation des freins » qui permet au modulateur EBS (14) de faire passer les freins en état actif ou passif par comparaison à la valeur de pression idéale.

2. Système de sécurité de charge selon la revendication 1, **dans lequel** est compris un capteur de pression (131) pourvu dans ledit bloc de vanne hydraulique (13) qui transmet à ladite unité de commande électronique (20) les données de « pression hydraulique » des vérins hydrauliques (12) qui fournissent une force de poussée auxdits mécanismes de maintien de charge (11).

3. Système de sécurité de charge selon la revendication 1, **dans lequel** la charge totale dudit véhicule est une valeur de référence déterminée par la somme du poids du véhicule et du poids de la charge à transporter.

4. Système de sécurité de charge selon la revendication 1, **dans lequel** lesdites données de « pression de suspension » sont fournies par l'intermédiaire des coussins d'air de suspension (15).

5. Système de sécurité de charge selon la revendication 1 ou 3, **dans lequel** ledit « signal indiquant que le véhicule a été chargé » est généré dans le cas où la charge totale du véhicule est supérieure à la valeur de référence ou égale à la valeur de référence.

6. Système de sécurité de charge selon la revendication 1, **dans lequel** dans le cas où lesdites informations de « pression hydraulique » atteignent la valeur de pression idéale, un « signal de commande hydraulique » est transmis depuis ladite unité de commande électronique (20) au bloc de vanne hydraulique (13) pour permettre l'arrêt de la pompe et des vannes.

7. Procédé de fonctionnement d'un système de sécurité de charge comprenant des vérins hydrauliques (12) activés par l'intermédiaire d'un bloc de vanne hydraulique (13) afin de permettre la fixation des charges sensibles devant être chargées sur un véhicule à chargement interne (10) et des mécanismes de maintien de charge (11) qui sont entraînés par lesdits vérins hydrauliques (12), lesdits coussins d'air de suspension (15) en communication avec les roues du véhicule à chargement interne (10) et un modulateur EBS (14), **dans lequel** sont comprises les étapes de fonctionnement de :
a) mesure de la charge totale du véhicule par ledit modulateur EBS (14) par le biais de la valeur de « pression de suspension » déterminée par les coussins d'air de suspension (15),
b) transmission du « signal indiquant que le véhicule a été chargé » par le modulateur EBS (14) à l'unité de commande électronique (20) dans le cas où la charge totale du véhicule est supérieure ou égale à la valeur de charge de référence, et début du fonctionnement du système de sécurité de charge en mode automatique,
c) début de la période de démarrage de référence définie dans l'unité de commande électronique (20) lors du début du fonctionnement du système de sécurité de charge,
d) sécurisation de la charge sensible avec les mécanismes de maintien de charge (11) lors de l'activation des vérins hydrauliques (12) sur le bloc de vanne hydraulique (13) par l'opérateur par l'intermédiaire du panneau de commande (16) par l'unité de commande électronique (20) avant l'expiration de la période de démarrage de référence,
e) transmission de données de « pression hydraulique » formées dans le sens de la compression par un capteur de pression (131) par l'intermédiaire du bloc de vanne hydraulique (13) à l'unité de commande électronique (20), et contrôle des données de « pression hydraulique » entrantes par l'unité de commande électronique (20) pour atteindre la valeur de pression idéale,
f) arrêt de la pompe et des vannes reliées au bloc de vanne hydraulique (13) par l'unité de commande électronique (20) avec un « signal de commande hydraulique » lorsque les vérins hydrauliques (12) atteignent la pression de compression idéale.

8. Procédé de fonctionnement d'un système de sécurité de charge selon la revendication 7, **dans lequel**, dans le cas où la période de démarrage de référence dans ladite étape (c) a été dépassée, afin de permettre à l'opérateur de remarquer que la charge sensible n'a pas été sécurisée, un « signal d'activation des freins » est transmis au modulateur EBS (14) à partir de l'unité de commande électronique (20) afin que l'activation des freins du véhicule et le mouvement du véhicule à chargement interne (10) soient limités.

9. Procédé de fonctionnement d'un système de sécurité de charge selon la revendication 7, **dans lequel**, dans ladite étape (a), dans le cas où la charge totale du véhicule est inférieure à la valeur de charge de référence, le « signal indiquant que le véhicule a été chargé » n'est pas transmis du modulateur EBS (14) à l'unité de commande électronique (20), et le système de sécurité de charge est actionné en mode manuel selon l'appréciation de l'opérateur.
